Europäisches Patentamt

European Patent Office

Office européen des brevets

(19)

(11) Publication number: **0 153 109 B1**

(12) **EUROPEAN PATENT SPECIFICATION**

(45) Date of publication of patent specification: **17.04.91**   (51) Int. Cl.⁵: **G06F 12/08**

(21) Application number: **85300859.7**

(22) Date of filing: **08.02.85**

(54) Cache coherence system.

(30) Priority: **10.02.84 US 579087**

(43) Date of publication of application:
**28.08.85 Bulletin 85/35**

(45) Publication of the grant of the patent:
**17.04.91 Bulletin 91/16**

(84) Designated Contracting States:
**AT BE CH DE FR GB IT LI LU NL SE**

(56) References cited:
**WO-A-82/03480**
**US-A- 4 056 844**
**US-A- 4 142 234**
**US-A- 4 322 795**

(73) Proprietor: **PRIME COMPUTER, INC.**
**Prime Park**
**Natick Massachusetts 01760(US)**

(72) Inventor: **Rodman, Paul K.**
**100 Meetinghouse Path**
**Ashland Massachusetts 01721(US)**

(74) Representative: **Blatchford, William Michael et al**
**Withers & Rogers 4 Dyer's Buildings Holborn**
**London EC1N 2JT(GB)**

EP 0 153 109 B1

## Description

The present invention relates to data processing systems, and more particularly to multiprocessor systems.

There are known computer architectures in which two or more data processors are linked to cooperatively utilize a common main memory. In such multi-processor systems, there are often operating conditions wherein a first processor might utilize information stored at a location in the main memory, modify that information internally and then write the modified information back to the original location in the main memory. While this process is going on, a second processor may also require updated information associated with the same location in the main memory. In order to accommodate such situations, multiprocessor systems must incorporate a protocol to permit each processor to know whether the information stored in the various main memories is stale or reflects current information.

In one particular prior art form, exemplified by the 850 System, manufactured by Prime Computer, Framingham, Massachusetts, two data processors (DP-1 and DP-2) are coupled by way of a common memory bus (MB) to a main memory (MM). Each of the processors DP-1 and DP-2 includes a central processing unit (CPU-1 and CPU-2, respectively) and a local cache memory (LC-1 and LC-2, respectively). In this configuration, for example, each local cache memory may store an image portion of a program-to-be-executed which is stored in full in the main memory. The image program is stored in a format including a succession of words, each word having a tag portion, T, (representative of a page number, or high order location-defining bits in main memory) and associated data portions, D, (representative of the contents of the corresponding location in the main memory). In this format, the word number of each word in the stored succession in the cache memory is representative of the low-order location-defining bits in main memory. That is each local cache memory entry fully specifies a location in main memory, and the contents of that location. In operation, the local cache memories make this information available to their associated central processor, on request, on a high speed basis.

In this configuration, during operation, one data processor (DP-1) might modify the data associated with a main memory location in its local cache memory (LC-1). Since in the System 850, the local cache memories are "write-through" caches, the corresponding change is also written in the appropriate location in main memory. However, the other processor (DP-2) already may have stored the original contents of that location in main memory in its local cache memory (LC-2). Thus, unless the second data processor DP-2 is advised, it may request the information from its cache memory (LC-2) which is "Stale"; that is, the requested information does not correspond to the "modified" information currently stored at the location in main memory.

In order to prevent the use of such stale information, systems in the prior art, such as the System 850, include a system for detecting changes in information in the local cache memories of each processor coupled to the main memory, and for identifying to the respective data processors the particular entries in their local cache memory which are stale (or invalid); that is, those entries which correspond to locations in main memory whose contents have been modified by another data processor. With such information, the CPU's of the respective processors, upon requesting an identified invalid cache entry, declare a "cache miss" condition and go directly to main memory to read the requested information.

In the prior art systems, there is, in effect, a table associated with each local cache memory, which table includes a succession of entries (or words) initially corresponding to the tag portions of each entry (or word) in the local cache memory. In addition, there is an LIFO (or FIFO) memory associated with each local cache memory. Each data processor is adapted to transmit a cache change signal (representative of the location in main memory of the change) on the memory bus each time a cache change is made in the local cache memory at that respective data processor. On "write through" cache systems like the Prime System 850, the cache change signal may be the normal write signal. There is a controller associated with each data processor which identifies each cache change signal on the memory bus, and upon such identification, stores a signal representative of the local cache memory location in the LIFO (or FIFO) register associated with the data processor. Thus, a cumulative record of cache changes is made in the respective LIFO (or FIFO) registers.

In operation, each data processor is adapted so that periodically, or in response to the execution of selected instructions, its associated LIFO (or FIFO) register is interrogated (on a LIFO or FIFO basis) so that the contents may be used by the data processor's CPU to identify which of the entries in its local cache memory is stale (or invalid).

Thus, with this prior art configuration, each data processor is apprised of changes in the data in the respective locations of the main memory. This may occur both in systems which have "write-through" local caches, or where the caches may just accumulate data changes which might be subsequently written to main memory in a batch.

2

While this prior art approach does permit the necessary intercommunication between processors, the use of a separate "tag table" memory (originally duplicating the local cache memory) and a necessarily (as a practical matter) large LIFO (or FIFO) memory to store all of the cache changes which may occur, requires a substantial amount of hardware, and associated circuit complexity. further, due to the requirement to process each entry in the LIFO (or FIFO) registers separately (some of with may correspond to multiple changes in the same main memory location) results in unnecessary, and time consuming processing.

Other prior art systems are disclosed in U.S. Patent No. 4,142,234 (Bean et al) and U.S. Patent No. 4,322,795 (Lange et al).

U.S. Patent No. 4,142,234 is concerned with processor systems using caches. As noted in this Patent, means need to be provided to ensure that when the content of any cache copy is changed, no unchanged copy remains in any cache. Normally a buffer invalidation address stack (BIAS) is provided in each processor to receive remote store addresses, so as to invalidate them in the given processor's cache directory. This system solves the problem of eliminating many redundant BIAS interrogations of each cache by recognising each remote store request to the same cache block after the first BIAS request for that block address. A filter memory is provided with each BIAS and cache directory which retains the most recent cache block addresses that have been passed to its BIAS for interrogating the associated cache directory. Subsequent addresses remotely provided by another processor that would interrogate the same cache block addresses are "filtered out" by not being passed to the associated BIAS. When any processor makes a store request, the store address is broadcast to the filter memories associated with the processors. The address is then compared with the valid addresses in each other filter memory.

U.S.Patent No. 4,322,795 discloses a duplicate directory arrangement for selective cleaning of the cache in multi-processor systems where data in a cache becomes obsolete by virtue of a change made to the corresponding data in the main memory by another processor. The duplicate directory stores the same indexed information as is stored in the primary directory. Comparison means are available coupled to the output of the duplicate directory and coupled to the output of a change modification stack for comparing the tag word of said change modification stack with the tag words in the duplicate directory. If there is a match, a clear signal is generated which clears the associated full·empty bit to the empty status.

It is an object of the present invention to provide an improved multiprocessor system.

It is another object to provide a multiprocessor system which communicates the occurrence of local cache changes between processors on a hardware efficient basis.

Another object is to provide a multiprocessor system which permits multiple processors to timewise effectively identify changes in cache memory throughout the system.

According to the present invention, in a processing system having a main memory and at least two processors operable to access the main memory, each processor includes an associated cache memory arranged to store cache data associated with data stored in the main memory. The system is arranged such that the cache data is stored in cache memory locations corresponding to main memory data. The system is further arranged such that each processor further includes a cache coherence system characterised by a cache invalidate table memory having internal storage locations for storing data associated with the data stored in the respective cache memory, means for detecting when the contents of storage locations in the cache memories of one or more of the data processors have been modified in conjunction with the activity of that data processor or those data processors, and means responsive to the detecting means for generating and storing in the cache invalidate table memory a multiple element linked list defining locations in the cache memory or memories having modified contents. Each element of the list may define a respective cache memory storage location and may also identify the location in the cache invalidate table memory of the next element in the list.

The cache coherence system may be selectively operated by its associated data processor for sequentially processing its stored linked list, element by element. As that list is processed, information of the list is provided to the coupled data processor, which in turn may identify which locations in its cache memory are presently storing stale (or invalid) data.

In this way, each data processor of a multiprocessor system may be apprised of changes in the main memory which have occurred as a result of activities of the data processors in the multiprocessor system. Moreover, the linked list stored in the coherence systems establishes a highly efficient means for providing that information to the respective data processors. More particularly, there is no need to maintain a LIFO (or FIFO) type memory, as used in the prior art, which includes entries for all changes in the respective local cache memories. Furthermore, there is no need for maintaining a record of each change initiated by any of the data processors for any given main memory location, since the linked list established in the respective coherence systems requires only a single entry in the cache invalidate table memory upon detection of the first change at that location. No further changes need be identified to the respective data processors for subsequent changes written to that main memory location.

In one embodiment of the invention, a multiprocessor system includes a main memory for storing main memory data at locations in that memory. The main memory is coupled to a memory bus for the multiprocessor system. A plurality of data processors, for example, n, where n is an integer greater than 1, is coupled to the memory bus. Each data processor includes a central processing unit (CPU) and a local cache memory adapted to store cache data at internal locations. That cache data is associated with main memory data stored in corresponding locations in the main memory. Each data processor is selectively operable for transferring cache data from selected locations in its local cache memory to its central processing unit. Each data processor is also selectively operable in conjunction with its central processing unit for generating cache data (for example, by retrieving cache data from the local cache memory), modifying that cache data, and writing the modified cache data to the local cache memory (and for a "write-through" cache system, writing the modified cache data to main memory).

Each data processor is coupled to an associated cache coherence processor (CCP). Each cache coherence processor includes a cache invalidate table, or CIT, memory adapted for storing a CIT data word associated with each of the locations of the local cache memory associated with that cache coherence processor. The cache coherence processors each have an associated detector for determining when new cache data is generated at the associated data processor and stored in its local cache memory, and also for determining the location in the local cache memory at which the new generated cache data is stored. In conjunction with the storage of new cache data in the local cache memory, a cache change signal which is indicative to the other data processors coupled to the bus of the location of the generated and stored new cache data in the local cache memory of the originating data processor. Each CCP is adapted to receive such cache change signals.

Each CCP is further adapted to load the CIT memory. To this end, the CCP's are selectively operable (in response to the central processing unit at their respective host data processor) to load the locations of their CIT memory with CIT data words corresponding to portions of the cache data at the respective locations in the host processor's local cache memory.

Each CCP is also selectively operable in response to a received cache change signal for modifying the contents of the location of the CIT memory corresponding to the determined location of the generated and stored new cache data indicated by the cache change signal. As a result of the latter operation, the CIT data word at the corresponding location of the CIT memory of a CCP is changed to a cache invalidate word. Each cache invalidate word includes a flag portion (or link bit) representative of the occurrence of the generation and storage of new data in that respective cache memory, and also includes a pointer portion representative of the location in the CIT memory storing the next previously stored cache invalidate word. Consequently, the cache invalidate words in the CIT memory collectively define a linked list, with each of those cache invalidate words including a portion identifying a set of locations (word numbers) in main memory for which cache data has been changed at one of the data processors, and the second portion pointing to the address (word number) of the next previously stored cache invalidate word in the CIT memory.

In this embodiment, each of the data processors is selectively operable for identifying the locations in the CIT memory of its associated CCP having a flag portion (or link bit) stored therein. Each data processor is further adapted for identifying to its CPU those locations in its local cache memory corresponding to the locations of the associated CIT memory storing a flag portion. It is precisely those locations for which the local CPU recognizes that the data stored therein is stale. Thereafter, upon a request by its CPU for the data portion of the word stored at that location in the local cache memory, a cache "miss" condition is present and that the requested data read from main memory rather than the local cache memory.

In one embodiment of the invention, each data processor includes an interrogation sub-system which is selectively operable in response to a request from its associated CPU for determining the substance of the linked list stored in the CIT memory. The interrogation sub-system initially identifies the location in the CIT memory of its associated CCP having the most recently written cache invalidate word. The data processor is then operative for that CIT location to identify the corresponding location in its local cache memory as being invalid (that is, containing stale data), and the addressed location is replaced with a new current addressed location. This process is subsequently repeated by the interrogation sub-system, first identifying the location in the CIT memory that is defined by the pointer portion of the cache invalidate word just processed, followed by the host data processor identifying the corresponding location in its local cache memory as invalid. This interrogation process is repeated for each element in the linked list formed by the cache invalidate words in the CIT memory. In this manner, the data processor may selectively interrogate the CIT memory in an efficient manner utilising the characteristics of the linked list of the CIT memory.

The processor system described above allows the communication of local cache change occurrences between processors on a hardware-efficient basis. It further allows multiple processor to identify quickly changes in cache memory throughout the system.

The invention, will now be described by way of example with reference to the drawings, in which:-

Figure 1 is a block diagram of an multiprocessor system embodying the invention;

Figure 2 is a detailed block diagram of a cache coherence processor for the system in Figure 1;

Figure 3A is a table representative of exemplary contents of a local cache memory in the system of

Figure 3B is a table representative of exemplary contents of a CIT memory in the system of Figure 1.

## DESCRIPTION OF THE PREFERRED EMBODIMENT

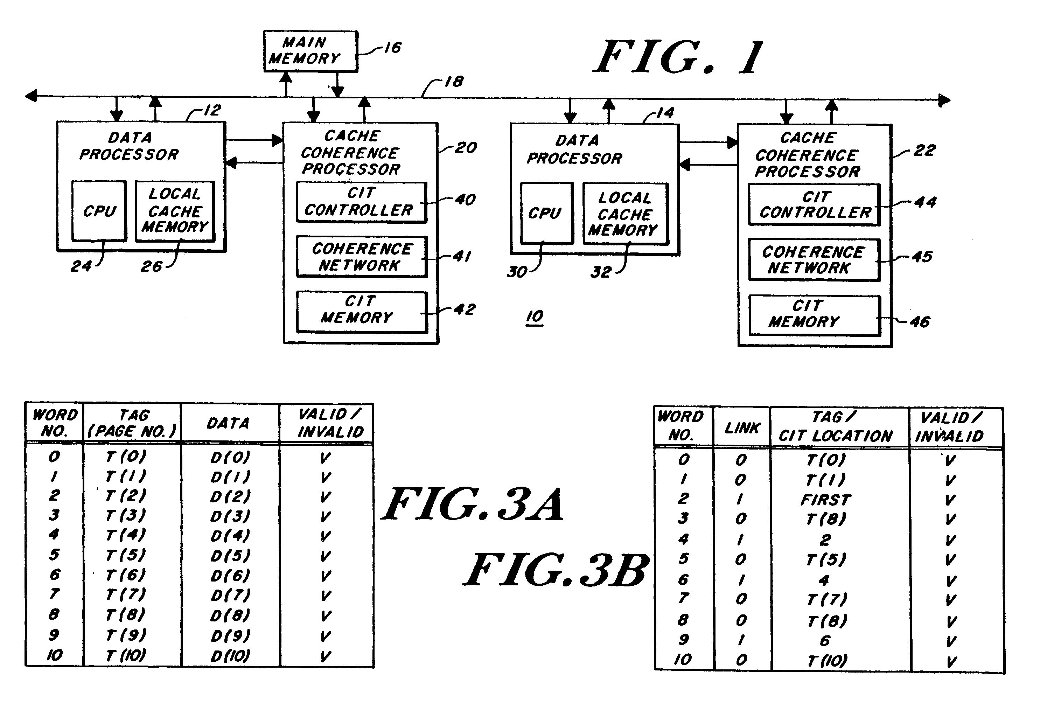

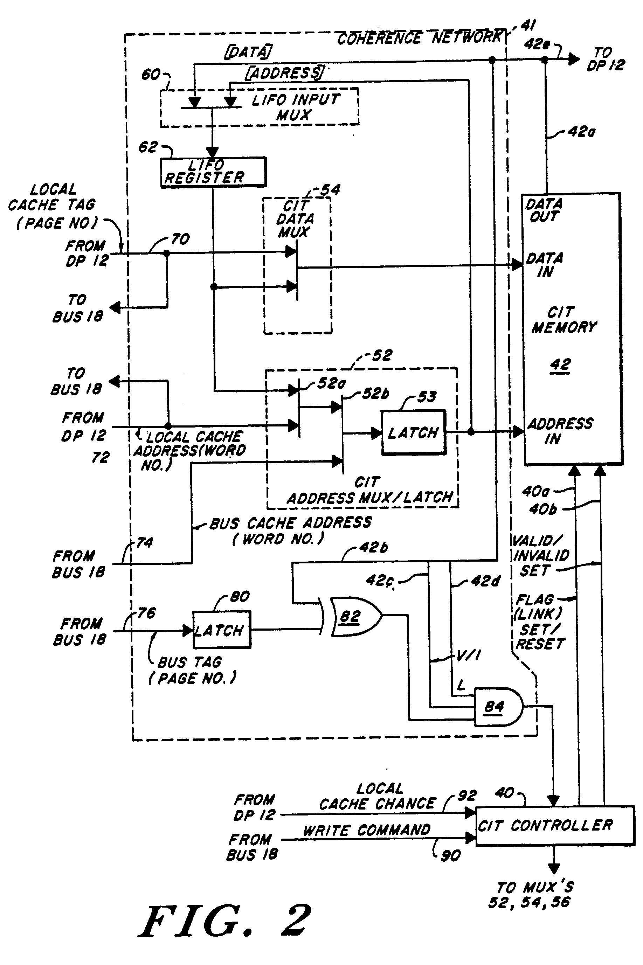

Referring to Figure 1, a multiprocessor system 10 embodying the present invention includes two data processors 12 and 14 coupled to a main memory 16 by way of the memory bus 18. In other embodiments, additional data processors may similarly be coupled to bus 18. The data processors 12 and 14 are respectively coupled to associated cache coherence processors 20 and 22. In the present embodiment, the cache coherence processors 20 and 22 are also coupled to bus 18. The data processor 12 includes a central processing unit (CPU) 24 and a local cache memory 26, and data processor 14 includes a central processing unit (CPU) 30 and a local cache memory 32. The cache coherence processor 20 includes a cache invalidate table (CIT) controller 40, coherence network 41 and a CIT memory 42. The cache coherence processor 22 includes a CIT controller 44, coherence network 45 and a CIT memory 46.

In the illustrated embodiment, the data processors 12 and 14 are separate data processors, each of which may execute an independent stream of instructions. In operation, each of data processors 12 and 14 is responsible for its own full instruction decode, effective address calculation, instruction execution, and calculation of data for the next instruction. The data processors 12 and 14 may share one copy of an operating system which can be run on either data processor, as can any user program. The local cache memories generally contain an image of a portion of the main memory 16, to be provided on request to the associated CPU's on a high speed basis. The local cache memories are random access memories formatted so that each address of a location corresponds to the low order (word number) bits of a corresponding set of locations in memory 16. Each local cache location includes a tag field for storing a tag T (representative of the high order (page number) bits of an associated location in main memory 16), a validity/invalidity field for storing a valid (V) bit or invalid (I) bit (indicative of the validity of the cache data at that location), and a data field for storing data D (representative of the contents of that main memory location defined by the word and page number).

In function, the data processors 12 and 14, main memory 16 and memory bus 18 in the present embodiment are similar to the corresponding elements in the System 850 manufactured by Prime Computer, Inc., Framingham, Massachusetts.

Generally, the data processors 12 and 14 interact with their associated coherence processors 20 and 32 to prevent stale information from being loaded from their respective local cache memories to their associated CPU's. Initially, each cache coherence processor maintains a record of the locations in main memory 16 for which data is stored in the local cache memory of its associated data processor, together with a copy of the validity·invalidity bit stored in association with each entry in the local cache memory. When a CPU data writes into a location in its associated local cache memory (so that the data content of that location differs from the data content originally at the corresponding main memory locations), that CPU also applies a write command signal together with signals representative of the main memory address and new data to the bus 18 in order to cause a corresponding write operation changing the data at the associated locaiton of main memory 16. The write command signal, together with the main memory address signal are collectively referred to below as a cache change signal for use by other data processors coupled to the bus 18.

In the present embodiment, in response to a main memory write operation by a CPU, for example CPU 12, the contents of local cache memory 26 are changed only when the write operation affects a main memory location for which an image (or a corresponding entry) is currently maintained in the local cache memory 26. As a result, for the CCP 20, the write command (on bus 18) and the associated page and word location-defining signals (on bus 18) from a processor other than the host processor 12 constitute a cache change signal which initiates a change in the CIT memory. However, a cache change signal from the host processor 12 collectively includes those write and location-defining signals on bus 18 and, in addition, a local cache change signal directly from the host data processor 12 indicating that a change in the local cache memory has taken place.

Alternatively, in a write-allocate type system according to the present invention, any write operation by a CPU results in a change (inserting cache data) in its local cache memory. In the latter type system, since all write operations result in a change in local cache memory of the originating processor, a write command (on bus 18) and the word and page location-defining signals (on bus 18) provide the cache change signal for use by the cache coherence processor of the host processor, regardless of the data processor which initiated the write operation.

The respective cache coherence processors on bus 18 detect the occurrence of each cache change signal, and in turn indicate to their associated data processors that the contents of the corresponding entry in their respective local cache memories are stale (that is, invalid). When a cache location in one of the data processors 12 and 14 contains cache data that has been identified as stale, the respective data processor forces a memory read to the current information in the main memory 16 the next time that "stale" location is referenced.

Fig. 2 shows a detailed block diagram of an exemplary form for the cache coherence processor 20. In Fig. 2, the CIT memory 42 is a random access memory. The network 41 includes a CIT address multiplexer (MUX) latch 52, a CIT data multiplexer (MUX) 54, LIFO input multiplexer (MUX) 60, a LIFO register 62, a latch 80 gate 82 and gate 84. The coherence network 41 provides an interface between CIT controller 40 and CIT memory 42. The CIT controller 40 generally controls the various multiplexers and timing to accomplish and coordinate the functions described below.

The address input to the CIT memory 42 is driven by the CIT address multiplexer/latch 52. The MUX 52 includes multiplexers 52a and 52b and latch 53. The data input to the CIT memory 42 is driven by the CIT data multiplexer 54. The output line from MUX 52 and the data out line 42a from the CIT memory 42 are applied as inputs to the LIFO input multiplexer 60 which in turn is coupled to the LIFO register 62. The LIFO register 62 provides an a first input to the CIT data MUX 54 and to the MUX 52a of the CIT address MUX 52. The output of MUX 52a provides a first input to MUX 52b. The output of MUX 52b is transferred by way of latch 53 to the address input port of the CIT memory 50.

The second input to the CIT data MUX 54 is provided by a local cache tag line 70 which maintains the high order (page number) address bits of a location in the local cache of the data processor 12. The second input for the MUX 52a is a local cache address line 72 which maintains the low order (word number) address bits of the location in the local cache of the data processor 12. The second input for the MUX 52b is the bus cache address line 74 which maintains the low order (word number) address bits of the cache change signal provided from the bus 16.

The high order (page number) address bits of the cache change signal from bus 16 is applied by way of bus tag line 76 to latch 80 which in turn is coupled to one input of gate 82. The second input of the gate 82 is provided by the data field portion 42b of the data out line 42a from the CIT memory 42. The output of gate 82 is coupled to a first gate 84. The validity/invalidity field portions (42c and 42d, respectively) of data out line 42a of memory 42 are coupled as further inputs to gate 84. The output of gate 84 is coupled to the CIT controller 40. Controller 40 has a flag (link) set/reset output line 40a coupled to the CIT memory 42. CIT controller 40 also has a first output driven by the write command line 90 coupled to bus 18 and a second output driven by a local cache change line 92 coupled to the data processor 12. With this configuration, the line 70 is coupled to the bus 16 to provide the local cache high order, or tag, address bits for a cache change signal generated for data processor 12, and the line 72 is coupled to the bus 18 to provide the low order, or word number address bits for that cache change signal. The write command signal of the cache change signal is applied to bus 18 by the CPU of processor 12.

In operation, generally, the CIT controller 40 initially controls the CIT data MUX 54 and the CIT address MUX/latch 52 to load the respective word locations in the CIT memory 42 with all of the tags and associated validity invalidity bits currently resident at the corresponding locations in the local cache memory of the data processor 12. Thereafter, when any entry in the local cache memory 26 of data processor 12 is changed, a cache change signal is generated on bus 16 by way of lines 70 (page number), line 72 (word number), line 90 (write command) and line 92 (local cache change). In the illustrated embodiment, that cache change signal from data processor 12 initiates the modification of the contents of CIT memory 42.

When a cache change signal generated by data processor 14 is received on lines 74, 76 and 90 from the bus 18 (representing a change in the local cache memory 32) the CIT controller 40 initiates the modification of the contents of CIT memory 42. When a cache change signal is detected by CCP 20, MUX 53 is controlled to address the location (word) number in CIT memory 42 defined by the bus cache address line 74. The data from that location is applied by line 42b to gate 82 where it is compared to the bus tag from line 76. If there is not a match and if the flag (link) bit from line 42d has not been previously set and the validity bit from line 42c indicates that local cache memory 26 has valid cache data at that location, then gate 84 provides a "stale data event" signal to controller 40, indicating that the cache data at local cache memory 26 is now invalid. CIT controller 42 then provides a signal on line 40a which sets the flag bit in the addressed location of CIT memory 42 and controls MUX 54 to load the contents of LIFO register 62 in the tag field of the addressed location of CIT memory 42 (thereby changing a CIT data word to a cache invalidate word).

Thus summarizing, upon identification of a cache change signals controller 40 controls the MUX 52 to address the word number location in CIT memory 42 corresponding to the address indicated by the cache change signal on line 74. At that point, the contents of LIFO register 62 (which as explained below, is representative of the (word number) address in CIT memory 42 of the most recently changed cache location) is loaded by way of the CIT data MUX 54 to the location addressed by the MUX/latch 52. In addition, the CIT controller 40 also loads an additional link bit, or flag, into the location addressed by MUX 52.

Following this operation, the (word number) address from the latch 53 is applied by way of the LIFO input MUX 60 and loaded into the LIFO register 62. The contents of register 62 are thus maintained to identify the preceding element in the linked list. As a result, upon the detection of the next cache change signal, the address of the CIT memory containing the most recently stored data is ready for entry to the CIT memory, in the manner described above.

During a CCP interrogation cycle by the data processor 12, the CIT controller 40 successively determines the elements of the linked list by reading out the contents of a flagged locations in CIT memory 42 by way of the LIFO in MUX 60. At this time controller 40 also resets the flag (or link) bit and sets the validity bit to invalid (I). Since each of the flagged locations in the CIT memory 42 include the address of the next previously stored flagged entry in the CIT memory 42 that address is transferred by way of LIFO register 62 to the input of MUX 52a which in turn is coupled through MUX 52b and latch 53 to address the next linked list element in the CIT memory 42. This process repeats throughout the linked list to successively generate signals representative of a succession of the identified local cache locations on line 42a which have been determined to hold stale cache data. The signals from this line 42a are transferred by way of line 42e to the data processor 12 where those signals are used by the CPU 24 to identify the stale data in the local cache memory 26. In response to each such received signal on line 42e, CPU 24 changes the valid/invalid bit of the corresponding word in its local cache 26 from valid (V) to invalid (I).

Figs. 3A and 3B illustrate the operation of the data processor 12 and cache coherence processor 20. Fig. 3A illustrates exemplary contents of the local cache memory 26 in table form. In the present embodiment, the local cache memory 26 is a random access memory. The table in Fig. 3A illustrates the first 10 locations (or words) in the local cache memory 26. This table is formatted with low order bits corresponding to the word number, with each word number having a tag field (corresponding to the page number in the main memory 16), and a data field corresponding to the contents of main memory at the location defined by the tag and word number. In Fig. 3A, the tags are denoted the letter T followed parenthetically by the associated word number, and the data contents for the corresponding main memory location are represented by the letter D followed parenthetically by the number corresponding to the word number. In Fig. 3A, locations in memory 26 contain valid data and thus include a validity bit denoted by V. As described below, after an interrogation of the CIT memory to identify locations which have been determined to contain invalid data (that is, data which no longer represents the contents of the corresponding main memory location due to the activity of data processor 14), the valid/invalid field would be changed to include an invalidity bit denoted by I for each identified invalid entry.

In operation, initially, the local cache memory 26 is loaded with a portion of the contents of the main memory 16, with that portion corresponding to the set of cache data words T(i), D(i). These data words are provided to the CPU 24 of data processor 12 on request in a high speed manner.

From time to time, as the data processor 12 is apprised of changes in the contents of the corresponding locations of main memory 16 (that is, in conjunction with an interrogation of the CIT memory), the respective data words for those corresponding locations in the cache memory 26 are marked as invalid by changing the valid/invalid bit from V to I. In the example of Fig. 3A, no such interrogation takes place since any changes were made in a cache memory. When the CPU 24 requests cache data from one of the invalid local cache memory locations, a cache miss condition is determined to exist and, in response, the CPU 24 obtains the requested data directly from main memory 16, rather than from local cache memory 26.

Fig. 3B illustrates the contents of the CIT memory 42 for the example Of Fig. 3A following the receipt from bus 16 of a succession of cache change signals indicative of changes made by data processor 26 in (word number) locations 2, 4, 6 and 9 in succession. In the present example of Figs. 3A and 3B, the CIT memory 42 is shown to have CIT data words in locations 0, 1, 3, 5, 7, 8 and 10, with each of these words having a tag, a valid/invalid bit V and a flag (or link) bit set to 0. As shown, CIT memory 42 has cache invalid words in locations 2, 4, 6, and 9, with each of these words having a link bit set to 1, a CIT memory address, and a valid/invalid bit V. The table of Fig. 3B is formatted with a word location corresponding to each word location in the cache memory 26, with the low order bits defining word numbers in the same manner. Thus, the data field associated with each word number contains either a tag in the same format as stored in the cache memory 26, or CIT location word (denoted by a digit in Fig. 3B).

In operation, initially, the data field for the memory 42 includes tag words corresponding to all the tag words in the corresponding locations in the local cache memory 26. As data processor 14 changes the contents of the various locations its local cache memory (and also the corresponding locations of main memory 16), the data in local cache memory 26 becomes "stale" and the cache data words at the corresponding memory 42 locations defined by entries in the table of Fig. 3B are replaced with cache invalidate word. The CIT location portion of the cache invalidate word defines the word number of the location in the memory 42 storing the next previously entered cache invalidate word.

In the illustrated embodiment of Fig. 3B, initially, the tag CIT location field contained the full set of tags T(i), with all the link bits set to 0 and all the valid/invalid bits set to V. At a point in time, cache coherence processor 20 determined that data processor 16 changed the contents of one of the locations in memory 16 having low order bits corresponding to word number 2. At that point in time, a corresponding cache change signal was generated by that data processor 16 which denoted the address 2 on bus cache address line 74. At that point, a reference word (denoted FIRST) stored in LIFO register 26 (at initialization) was transferred in by way of MUX 59 to word number 2 of CIT memory 42 (as addressed by latch 53) in memory 42. At that time, controller 40 wrote a 1 in the link bit field. The location word FIRST identifies the entry at word number 2 as the first stale data in the memory 42 since that memory was last interrogated by the CPU 12. In this exemplary configuration, the FIRST entry is arbitrary since any signal, or no signal at all, can be used to denote the end of the linked list of cache invalidate words in memory 42. The cache address 2 is retained in latch 53 for use subsequently in loading the LIFO register upon the occurrence of the next main memory change as indicated to the cache coherence processor 20 by the next cache change signal.

In the example of Fig. 3B, this next occurrence corresponds to a change in word 4 of the data processor 16. At that point in time, word 4 of CIT memory 42 is loaded address 2 frOm the LIFO register 62 (with the link bit being set to 1 also). The next cache data change by processor 16 in the illustrated example is the location having low order bits corresponding to word number 6. As a consequence of this cache data change, the cache invalidate word at word number 6 was entered, with the CIT location word corresponding to location 4. The link bit was also set to I for word number 6. Similarly, the cache data change reflected in Fig. 3B is for word number 9, where the link bit was set to 1 and the CIT location word was entered for the location 6, corresponding to the next previously stored cache invalidated word. For this example, then, the memory 42 includes a linked list, at locations 2, 4, 6 and 9, with each element of the list having an identified flag (or link) portion and a location-defining portion, with the latter defining the location in memory 42 of the next previously entered element of the list.

This process continues for any location in memory 42 which corresponds to a change in the local cache memory of processor 12. In the event, for example, location having word number 4 is changed again, the CIT processor 40 identifies the contents of

word number 4 of memory 42 and recognizes that the corresponding local cache data has already been determined to be stale, and no changes made in the memory 42 for this event.

With this configuration, the CPU 24 of data processor 12 may selectively interrogate various locations in the memory 42 of the CCP 20, or it may request that all of the elements of linked list defined therein be transferred sequentially back to the data processor 12 identifying invalid i.e., stale entries in the local cache memory 26. As each entry is transferred back to processor 12, the valid/invalid bits of both the local cache memory 26 and CIT memory 42 for that word number are set to I, and the flag (or link) bit is reset to 0.

## Claims

1. A processing system having a main memory (16) and at least two processors (12, 14) operable to access the main memory, each processor including a respective associated cache memory (26) arranged to store cache data associated with data stored in the main memory, the system being arranged such that the cache data is stored in cache memory locations corresponding to main memory locations for storing the associated main memory data, and each processor further including a cache coherence system (20, 22) characterised by a cache invalidate table memory (42) having internal storage locations for storing data associated with the data stored in the respective cache memory, means for detecting (41) when the contents of storage locations in the cache memories of one or more of the data processors have been modified in conjunction with the activity of that data processor or those data processors, and means (40) responsive to the detecting means for generating and storing in the cache invalidate table memory a multiple element linked list defining locations in the cache memory or memories having modified contents.

2. A processing system according to claim 1, characterised in that each element in the list defines a respective cache memory storage location and identifies the location in the cache invalidate table memory of the next element in the list.

3. A system according to claim 1 or claim 2, characterised by a memory bus associated with and coupled to the main memory and to each data processor (12, 14); each data processor (12, 14) including, in addition to its respective cache memory (26), (i) a central processing unit (CPU), (ii) selectively operable means for transferring cache data from selected locations in the said cache memory to the said central processing unit, (iii) cache data means selectively operable in conjunction with the said central processing unit for generating cache data and for storing the generated cache data in selected locations in the said cache memory;
the system being further characterised by:-
detection means associated with each data processor for determining when the cache data means stores the generated cache data in its cache memory and for determining the location of the generated cache data stored in the cache memory associated with its CCP;
cache change means associated with each data processor and responsive to the said determination, for generating a cache change signal, the cache change signal being representative of the location of the generated cache data stored in the cache memory associated with its CCP,
a plurality of cache coherence processors (CCP's) (20, 22) each CCP being associated with a respective one of the data processors, and including; (i) a cache invalidate tag (CIT) memory (42) including means for storing a CIT data word associated with each of the locations in the cache memory associated with the said CCP, (ii) means (40) for receiving the said cache change signals, and (iii) means (41) for loading the said CIT memory including (a) selectively operable means (52, 54) responsive to the CPU of its associated data processor for loading the locations of the CIT memory with CIT data words corresponding to the cache data at the respective locations in the cache memory associated with the said CPU, and (b) selectively operable means (40, 80, 82, 84) responsive to the said received cache change signals for modifying the contents of the location of said CIT memory corresponding to the determined location of the generated cache data, whereby the said locations of the CIT memory store a linked list of cache invalidate words, each cache invalidate word including a flag portion representative of the occurrence of the said generation and storage and including a pointer portion representative of the location in the CIT memory storing the next previously stored cache invalidate word in the CIT memory.

4. A system according to claim 3, characterised in that each of the data processors further includes a selectively operable interrogator including CIT means for identifying linked list locations in the CIT memory of its associated CCP having a flag portion stored therein and cache means for identifying the locations in the local cache memory of the data processor corresponding to the linked list locations in the associated CIT memory storing a flag portion therein.

5. A system according to claim 4, characterised in that the said cache means includes means for successively determining the identity of each of the linked list locations from the pointer portion of the next previously stored cache invalidate word.

6. A system according to claim 3, characterised in that the cache change means includes means for transferring the cache change signals to each CCP at least in part by way of the memory bus.

7. A system according to claim 2, further characterised by means selectively operable by one of the data processors for sequentially processing the stored linked list element by element, and for communicating to the said data processor the locations in the cache memories having changed contents defined by the linked list.

8. A system according to claim 2 or claim 7, further characterised by: means for detecting when the contents of a cache memory location in one of the data processors have been changed in conjunction with the operation of the said data processor, and means for generating cache change signals representative of the said detections; and means for communicating the cache change signals to the other data processors.

**Revendications**

1. Un système de traitement comportant une mémoire principale (16) et au moins deux processeurs (12, 14) susceptibles de fonctionner pour permettre d'accéder à la mémoire principale, chaque processeur comprenant une antémémoire ou mémoire cache correspondante associée (26) agencée pour stocker des données préférentielles ou données d'antémémoire associées à des données stockées dans la mémoire principale, le système étant agencé de telle façon que les données d'antémémoire soient stockées dans des emplacements de l'antémémoire correspondant aux emplacements de la mémoire principale pour stocker les données de mémoire principale associées. et chaque processeur comprenant en outre un système de cohérence des données d'antémémoire (20, 22), caractérisé par une mémoire de table d'invalidation de données d'antémémoire (42) munie d'emplacements de stockage interne pour stocker des données associées aux données stockées dans l'antémémoire correspondante, des moyens (41) pour détecter une modification du contenu des emplacements de stockage dans les antémémoires d'un ou plusieurs des processeurs de données en conjonction avec l'activité du ou des processeur(s) de données, et des moyens (40) sensibles aux moyens de détection pour dresser et stocker dans la mémoire de table d'invalidation de données d'antémémoire une liste chaînée à élémenté multiples, définissant des emplacements dont le contenu a été modifié dans la ou les antémémoire(s).

2. Un système de traitement selon la revendication 1, caractérisé en ce que chaque élément dans la liste définit un emplacement correspondant de stockage d'antémémoire et identifie l'emplacement dans la mémoire de table d'invalidation de données d'antémémoire de l'élément suivant dans la liste.

3. Un système selon la revendication 1 ou la revendication 2, caractérisé par un bus de mémoire associé et couplé à la mémoire principale et à chaque processeur de données (12, 14); chaque processeur de données (12, 14) comprenant, en addition à son antémémoire correspondante (26), (i) une unité centrale de traitement (CPU), (ii) des moyens susceptibles de fonctionner de façon sélective pour transférer des données d'antémémoire depuis des emplacements sélectionnés dans ladite antémémoire jusqu'à ladite unité centrale de traitement, (iii) des moyens de données d'antémémoire susceptibles de fonctionner de façon sélective en conjonction avec ladite unité centrale de traitement pour émettre des données d'antémémoire et pour stocker les données d'antémémoire émises en des emplacements sélectionnés dans ladite antémémoire; le système étant en outre caractérisé par:
- des moyens de détection associés à chaque processeur de données pour déterminer le moment où les moyens de données d'antémémoire stockent les données d'antémémoire émises dans leur antémémoire et pour déterminer l'emplacement des données d'antémémoire émises stockées dans l'antémémoire associée à son processeur de cohérence de données d'antémémoire (CCP);
- des moyens indicatifs d'un changement de données d'antémémoire associés avec chaque processeur de données et sensibles à ladite détermination, pour émettre un signal de changement de données d'antémémoire, le signal de changement de données d'antémémoire étant représentatif de l'emplacement des données d'antémémoire émises stockées dans l'antémémoire associée à son CCP;
- un pluralité de processeurs de cohérence des données d'antémémoire (CCP's) (20, 22), chaque CCP étant associé avec l'un correspondant des processeurs de données. et comprenant: (i) une mémoire (42) de bits d'identification d'invalidation de données d'antémémoire (CIT) comprenant des moyens pour stocker un mot de données CIT associé à chacun des emplacements dans l'antémémoire associée audit CCP, (ii) des moyens (40) pour recevoir lesdits signaux de changement de données d'antémémoire, et (iii) des moyens (41) pour charger ladite mémoire CIT comprenant (a) des moyens susceptibles de fonctionner de façon sélective (52, 54) sensibles à l'unité centrale de traitement (CPU) de son processeur de données associé pour charger les emplacements de la mémoire CIT avec des mots de données CIT correspondant aux données d'antémémoire aux emplacements correspondants dans l'antémémoire associée à l'unité centrale de traitement (CPU), et (b) des moyens susceptibles de fonctionner de façon sélective (40, 80, 82, 84) sensibles auxdits signaux reçus de changement de données d'antémémoire pour modifier le contenu de l'emplacement de ladite mémoire CIT correspondant à l'emplacement déterminé des données d'antémémoire émises, de manière que lesdits emplacements de la mémoire CIT mettent en mémoire une liste chaînée de mots d'invalidation de données d'antémémoire, chaque mot d'invalidation de données d'antémémoire comprenant une partie de drapeau représentative de l'apparition de ladite émission et de ladite mise en mémoire, et comprenant une partie de pointage représentative de l'emplacement dans la mémoire CIT où est stocké le mot d'invalidation de données d'antémémoire qui a été mis en mémoire précédemment dans la mémoire CIT.

4. Un système selon la revendication 3, caractérisé en ce que chacun des processeurs de données comporte en outre un interrogateur susceptible de fonctionner de façon sélective, comprenant des moyens CIT pour identifier les emplacements de listes chaînées dans la mémoire CIT de son CCP associé muni d'une partie de drapeau mise en mémoire à l'intérieur et des moyens d'antémémoire pour identifier les emplacements dans l'antémémoire locale du processeur correspondant aux emplacements de listes chaînées dans la mémoire CIT associée dans laquelle se trouve stockée une partie de drapeau.

5. Un système selon la revendication 4, caractérisé en ce que lesdits moyens d'antémémoire comportent des moyens pour déterminer successivement l'identité de chacun des emplacements de listes chaînées à partir de la partie de pointage du mot d'invalidation de données d'antémémoire qui a été mise en mémoire précédemment.

6. Un système selon la revendication 3, caractérisé en ce que les moyens indicatifs d'un changement de données d'antémémoire comportent des moyens pour transférer les signaux indicatifs de changement de données d'antémémoire à chaque CCP au moins en partie au moyen du bus de mémoire.

7. Un système selon la revendication 2, caractérisé en outre par des moyens susceptibles d'être actionnés de façon sélective par l'un des processeurs de données pour traiter séquentiellement, élément par élément, la liste chaînée mise en mémoire, et pour communiquer audit processeur de données les emplacements dans les antémémoires ayant des contenus modifiés définis par la liste chaînée.

8. Un système la revendication 2 ou la revendication 7, caractérisé en outre par: des moyens pour détecter le moment où le contenu d'un emplacement d'antémémoire dans l'un des processeurs de données a été modifié en conjonction avec le fonctionnement dudit processeur de données, et des moyens pour émettre des signaux indicatifs de changement de données d'antémémoire représentatifs desdites détections; et des moyens pour communiquer les signaux indicatifs de changement de données d'antémémoire aux autres processeurs de données.

## Ansprüche

1. Verarbeitungssystem mit einem Hauptspeicher (16) und wenigstens zwei Prozessoren (12, 14), die auf den Hauptspeicher zugreifen, wobei jeder Prozessor jeweils einen zugehörigen Cache-Speicher (26) aufweist, der den im Hauptspeicher gespeicherten Daten zugehörige Cache-Daten speichert, wobei das System so aufgebaut ist, daß die Cache-Daten an Cache-Speicherplätzen gespeichert werden, die Hauptspeicherplätzen zum Speichern der zugehörigen Hauptspeicherdaten entsprechen, wobei jeder Prozessor ferner ein Cache-Kohärenzsystem (20, 22) aufweist, gekennzeichnet durch einen Cache-Ungültigmachungs-Tabellenspeicher (42) mit internen Speicherplätzen zum Speichern von den im jeweiligen Cache-Speicher gespeicherten Daten zugeordneten Daten, Einrichtungen (41), die erfassen, wenn der Inhalt der Speicherplätze in den Cache-Speichern eines oder mehrerer Datenprozessoren im Zusammenhang mit der Aktivität dieses Datenprozessors oder dieser Datenprozessoren modifiziert wurde, und auf die Erfassungseinrichtungen ansprechende Einrichtungen (40) zum Erzeugen und Speichern einer verbundenen Mehrfachelement-Liste im Cache-Ungültigmachungs-Tabellenspeicher, die die Plätze im Cache-Speicher oder in den Cache-Speichern mit modizifiertem Inhalt bestimmen.

2. Verarbeitungssystem nach Anspruch 1, dadurch gekennzeichnet, daß jedes Element in der Liste jeweils einen Speicherplatz im Cache-Speicher bestimmt und den Platz im Cache-Ungültigmachungs-Tabellenspeicher des nächsten Elements in der Liste identifiziert.

3. Anordnung nach Anspruch 1 oder 2, gekennzeichnet durch einen Speicherbus, der dem Hauptspeicher und jedem Datenprozessor (12, 14) zugeordnet und mit diesem verbunden ist, wobei jeder Datenprozessor (12, 14) zusätzlich zum jeweiligen Cache-Speicher (26) enthält: (i) eine zentrale Prozessoreinheit (CPU), (ii) selektiv betreibbare Einrichtungen zum Übertragen von Cache-Daten von gewählten Plätzen im Cache-Speicher zur zentralen Verarbeitungseinheit, (iii) selektiv zusammen mit der zentralen Verarbeitungseinheit betreibbare Cache-Dateneinrichtungen zum Erzeugen von Cache-Daten und Speichern der erzeugten Cache-Daten in gewählten Plätzen im Cache-Speicher,
ferner gekennzeichnet durch
jedem Datenprozessor zugeordnete Erfassungseinrichtungen zum Feststellen, wenn die Cache-Dateneinrichtung die erzeugten Cache-Daten in ihrem Cache-Speicher speichert und zum Feststellen des Platzes der erzeugten Cache-Daten, die in dem seinem CCP zugeordneten Cache-Speicher gespeichert sind, jedem Datenprozessor zugeordnete Cache-Änderungseinrichtungen, die auf die Bestimmung ansprechen, zum Erzeugen eines Cache-Änderungssignals, das den Platz der erzeugten Cache-Daten wiedergibt, die in seinem CCP zugeordneten Cache-Speicher gespeichert sind,
mehrere Cache-Kohärenzprozessoren (CCP) (20, 22), wobei jeder CCP jeweils einem der Datenprozessoren zugeordnet ist, und enthaltend (i) ein Cache-Ungültigmachungs-Marken-(CIT)-Speicher (42) mit Einrichtungen zum Speichern eines CIT-Datenwortes, das jedem der Plätze im Cache-Speicher zugeordnet ist, der dem CCP zugeordnet ist, (ii) Einrichtungen (40) zum Empfangen der Cache-Änderungssignale und (iii) Einrichtungen (41) zum Laden des CIT-Speichers mit (a) selektiv betreibbaren Einrichtungen (52, 54), die auf die CPU des zugeordneten Datenprozessors ansprechen, so daß die Plätze des CIT-Speichers mit CIT-Datenworten geladen werden, die den Cache-Daten an den jeweiligen Plätzen im Cache-Speicher entsprechen, der der CPU zugeordnet ist, und (b) selektiv betreibbaren Einrichtungen (40, 80, 82, 84), die auf die empfangenen Cache-Änderungssignale ansprechen, zum Modifizieren des Inhalts der Plätze des CIT-Speichers entsprechend dem bestimmten Platz der erzeugten Cache-Daten, durch die Plätze des CIT-Speichers eine verbundene Liste von Cache-Ungültigmachungs-Worten speichern, die je einen Markierungsteil enthalten, der das Auftreten der Erzeugung und Speicherung wiedergibt, sowie einen Hinweisteil, der den Platz im CIT-Speicher wiedergibt, der das nächste zuvor gespeicherte Cache-Ungültigmachungswort im CIT-Speicher speichert.

4. Anordnung nach Anspruch 3, dadurch gekennzeichnet, daß jeder Datenprozessor ferner eine selektiv betreibbare Rückfrageeinrichtung mit CIT-Einrichtungen zum Identifizieren verbundener Listenplätze im CIT-Speicher des zugehörigen CCP mit einem darin gespeicherten Markierungstei l und eine Cache-Einrichtung zum Identifizieren der Plätze im lokalen Cache-Speicher des den verbundenen Listenplätzen im zugehörigen CIT-Speicher, in dem ein Markierungsteil gespeichert wird, um faßt.

5. System nach Anspruch 4, dadurch gekennzeichnet, daß die Cache-Einrichtung eine Einrichtung zum aufeinanderfolgenden Bestimmen der Identität jedes der verbundenen Listenplätze vom Hinweisteil des nächsten zuvor gespeicherten Cache-Ungültigmachungswortes umfaßt.

6. Anordnung nach Anspruch 3, dadurch gekennzeichnet, daß die Cache-Änderungseinrichtung eine Einrichtung zum Übertragen der Cache-Änderungssignale zu jedem CCP zumindest teilweise über den Speicherbus umfaßt.

7. System nach Anspruch 2, gekennzeichnet durch selektiv durch einen der Datenprozessoren betreibbare Einrichtungen zum sequentiellen Verarbeiten der gespeicherten verbundenen Liste Element um Element und zum Mitteilen derjenigen Plätze in den Cache-Speichern, die durch die verbundenen Listen definierten geänderten Inhalt enthalten, an den Datenprozessor.

8. System nach Anspruch 2 oder 7, gekennzeichnet durch Einrichtungen zum Erfassen, wenn der Inhalt eines Cache-Speicherplatzes in einem der Datenprozessoren im Zusammenhang mit dem Betreib des Datenprozessors geändert wurde, Einrichtungen zum Erzeugen von Cache-Änderungssignalen, die die Erfassungen wiedergeben, und Einrichtungen zum Mitteilen der Cache-Änderungssignale an die anderen Datenprozessoren.

# FIG. 1

MAIN MEMORY — 16

18

DATA PROCESSOR — 12

CPU — 24  LOCAL CACHE MEMORY — 26

CACHE COHERENCE PROCESSOR — 20

CIT CONTROLLER — 40

COHERENCE NETWORK — 41

CIT MEMORY — 42

10

DATA PROCESSOR — 14

CPU — 30  LOCAL CACHE MEMORY — 32

CACHE COHERENCE PROCESSOR — 22

CIT CONTROLLER — 44

COHERENCE NETWORK — 45

CIT MEMORY — 46

## FIG. 3A

| WORD NO. | TAG (PAGE NO.) | DATA | VALID / INVALID |
|---|---|---|---|
| 0 | T(0) | D(0) | V |
| 1 | T(1) | D(1) | V |
| 2 | T(2) | D(2) | V |
| 3 | T(3) | D(3) | V |
| 4 | T(4) | D(4) | V |
| 5 | T(5) | D(5) | V |
| 6 | T(6) | D(6) | V |
| 7 | T(7) | D(7) | V |
| 8 | T(8) | D(8) | V |
| 9 | T(9) | D(9) | V |
| 10 | T(10) | D(10) | V |

## FIG. 3B

| WORD NO. | LINK | TAG / CIT LOCATION | VALID / INVALID |
|---|---|---|---|
| 0 | 0 | T(0) | V |
| 1 | 0 | T(1) | V |
| 2 | 1 | FIRST | V |
| 3 | 0 | T(8) | V |
| 4 | 1 | 2 | V |
| 5 | 0 | T(5) | V |
| 6 | 1 | 4 | V |
| 7 | 0 | T(7) | V |
| 8 | 0 | T(8) | V |
| 9 | 1 | 6 | V |
| 10 | 0 | T(10) | V |

**FIG. 2**